# EUROPÄISCHE PATENTSCHRIFT

(11) **EP 1 940 664 B1**
(45) Veröffentlichungstag und Bekanntmachung des Hinweises auf die Patenterteilung: **20.07.2011**
(21) Anmeldenummer: 06793697.1
(22) Anmeldetag: 21.09.2006
(51) Int. Cl.: B60T 8/40, H02K 7/14

(54) **HYDRAULIKAGGREGAT FÜR EINE EINE SCHLUPFREGELUNG AUFWEISENDE HYDRAULISCHE FAHRZEUGBREMSANLAGE**
HYDRAULIC UNIT FOR A HYDRAULIC VEHICLE BRAKE SYSTEM HAVING ANTI-SKID CONTROL
UNITE HYDRAULIQUE POUR UN SYSTEME HYDRAULIQUE DE FREINAGE DE VEHICULE A REGULATION DU PATINAGE

(30) Priorität: 04.10.2005 DE 102005047357
(43) Veröffentlichungstag der Anmeldung: 09.07.2008
(73) Patentinhaber: ROBERT BOSCH GMBH, 70442 Stuttgart (DE)
(72) Erfinder: REINER, Juergen, 88167 Gestratz (DE); SCHWARZ, Rainer, 87509 Immenstadt (DE); WEH, Andreas, 87477 Sulzberg (DE); IDEGUCHI, Tomoya, 87509 Immenstadt (DE); HOFMANN, Dietmar, 87509 Immenstadt (DE); HIPP, Josef, 87637 Seeg (DE)
(86) Internationale Anmeldenummer: PCT/EP2006/066574
(87) Internationale Veröffentlichungsnummer: WO 2007/039472

(56) Entgegenhaltungen:
- WO-A-01/39571
- WO-A-94/27045
- DE-A1- 4 441 976
- DE-A1- 19 653 638
- JP-A- 11 048 928
- JP-A- 11 091 527
- JP-A- 2002 119 013

## Beschreibung

### Stand der Technik

Die Erfindung betrifft ein Hydraulikaggregat für eine eine Schlupfregelung aufweisende hydraulische Fahrzeugbremsanlage mit den Merkmalen des Oberbegriffs des Anspruchs 1.

Derartige Hydraulikaggregate sind an sich bekannt. Sie weisen einen Hydraulikblock auf, an dem ein Elektromotor mit einer Stirnseite an einer Flachseite des Hydraulikblocks anliegend angebracht und verschraubt ist. Der Elektromotor dient zum Antrieb von Hydropumpen, die in dem Hydraulikblock eingesetzt sind. Der Hydraulikblock ist üblicherweise ein quaderförmiges Metallteil, meist aus einer Aluminiumlegierung, in dem Bohrungen zum Einsetzen hydraulischer Bauelemente wie Magnetventile, die Hydropumpen und Hydrospeicher angebracht sind. Durch Leitungsbohrungen, die im Hydraulikblock angebracht sind, sind die in den Hydraulikblock eingesetzten hydraulischen Bauelemente hydraulisch miteinander verschaltet. Mit den hydraulischen Bauelementen ist eine Schlupfregelung, d. h. eine (Brems-)Blockierschutz-, eine Antriebsschlupf- und/oder eine Fahrdyriamikregelung möglich, die auch als ABS-, ASR- und FDR-Regelungen bezeichnet werden.

Die Offenlegungsschrift DE 44 41 976 A1 offenbart ein derartiges Hydraulikaggregat, dessen Elektromotor ein zylindrisches, topfförmiges Gehäuse aufweist, in dessen offene Stirnseite ein lochscheibenförmiger Gehäusedeckel eingesetzt ist, der einen Lagerschild für ein Motorlager bildet. Ein Stirnrand des Motorgehäuses steht axial ein kurzes Stück über den Gehäusedeckel vor und taucht in eine kreisförmige Nut eines Hydraulikblocks ein. Der Stirnrand des Motorgehäuses ist zu einem nach außen stehenden Radialflansch umgeformt, das Motorgehäuse umgebendes Material des Hydraulikblocks ist nach innen umgeformt, so dass es den Radialflansch des Motorgehäuses übergreift und den Elektromotor mit dem Hydraulikblock verbindet.

Ein weiteres Hydraulikaggregat offenbart die Offenlegungsschrift DE 196 53 638 A1, dessen Elektromotor ebenfalls ein zylindrisches, topfförmiges Gehäuse mit einem lochscheibenförmigen Gehäusedeckel aufweist, der ein Lagerschild für ein Motorlager bildet. Die Verbindung des Elektromotors mit dem Hydraulikblock ist nicht offenbart. Vom Gehäusedeckel stehen zwei rohrförmige, koaxiale und zueinander konzentrische Axialbünde nach außen ab. Der innere Axialbund nimmt das Motorlager auf, der äußere Axialbund greift in eine Ansenkung des Hydraulikblocks ein

Ein weiteres derartiges Hydraulikaggregat offenbart die internationale Patentanmeldung WO 94/27 045 A. Bei diesem Hydraulikaggregat ist ein Elektromotor mit einer Stirnseite an einer Flachseite eines Hydraulikblocks angeordnet. Ein Motorlager greift in eine ringstufenförmige Erweiterung eines Exzenterraums des Hydraulikblocks ein und zentriert den Elektromotor zum Exzenterraum des Hydraulikblocks. Ein bündig in ein Motorgehäuse eingesetzter Motorgehäusedeckel aus Kunststoff weist einen flachen Axialbund auf, der das Motorlager und eine Motorwelle axial umschließt und der abdichtend in eine Ansenkung des Hydraulikblocks eingreift. Verbunden ist der Elektromotor mit dem Hydraulikblock mit Schrauben, die über den Umfang verteilt um das Motorgehäuse herum angeordnet sind und die einen Radialflansch des Motorgehäuses durchgreifen.

### Erläuterung und Vorteile der Erfindung

Beim erfindungsgemäßen Hydraulikaggregat mit den Merkmalen des Anspruchs 1 ist der Elektromotor durch einen umlaufenden, umformenden Fügevorgang mit dem Hydraulikblock verbunden. Der Fügevorgang kann beispielsweise ein Verstemmen sein. Umlaufend ist dabei nicht zwingend als Arbeitsrichtung des Fügevorgangs zu verstehen, sondern dahingehend, dass die fertige Fügung sich über den Umfang des Elektromotors erstreckt. Vorzugsweise bewirkt die Fügung des Elektromotors mit dem Hydraulikblock eine Abdichtung zwischen einem Motorgehäuse und dem Hydraulikblock.

Die Erfindung hat den Vorteil, dass sie einfach, schnell und preisgünstig herstellbar ist und sich zu einer Automatisierung und damit für eine Serienfertigung eignet. Die erfindungsgemäße Verbindung ermöglicht eine Abdichtung des Elektromotors am Hydraulikaggregat ohne Dichtmaterial. Es entfallen Befestigungsteile wie Schrauben oder Muttern und es erübrigt sich ein Gewindeschneiden im Hydraulikblock.

Der Elektromotor weist einen Axialbund auf, der abdichtend in eine Ansenkung des Hydraulikblocks eingreift. Des weiteren greift ein Motorlager in einen Exzenterraum des Hydraulikblocks ein und zentriert den Elektromotor am Hydraulikblock.

Die Unteransprüche haben vorteilhaften Ausgestaltungen und Weiterbildungen der im Anspruch 1 angegebenen Erfindung zum Gegenstand.

### Zeichnung

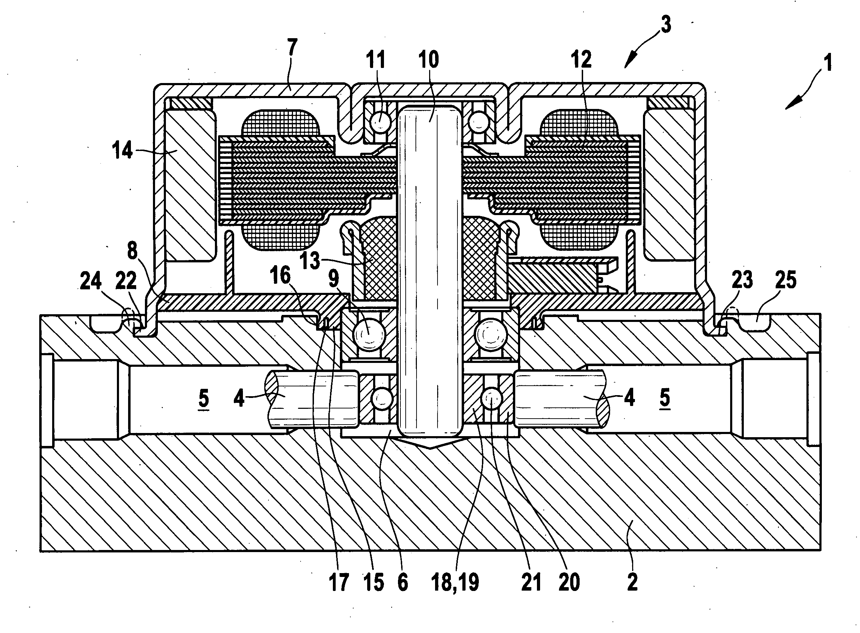

Die Erfindung wird nachfolgend anhand eines in der Zeichnung dargestellten Ausführungsbeispiels näher erläutert. Die einzige Figur zeigt einen Achsschnitt eines erfindungsgemäßen Hydraulikaggregats. Die Zeichnung ist als teilweise vereinfachte Darstellung zur Erläuterung der Erfindung zu verstehen.

### Beschreibung des Ausführungsbeispiels

Das in der Zeichnung dargestellte Hydraulikaggregat 1 weist einen Hydraulikblock 2 und einen Elektromotor 3 auf. Der Elektromotor 3 ist mit einer Stirnseite an einer Flachseite des Hydraulikblocks 2 angebracht. Der Hydraulikblock 2 ist ein flacher, in Draufsicht rechteckiger, quaderförmiger Körper aus beispielsweise einer Aluminiumlegierung. Im Hydraulikblock 2 sind zwei Kolbenpumpen als Hydropumpen und in der Zeichnung nicht sichtbare Magnetventile, Hydrospeicher, Rückschlagventile als hydraulische Bauelemente untergebracht und hydraulisch miteinander verschaltet. Das Hydraulikaggregat 1 dient zur Schlupfregelung einer im Übrigen nicht dargestellten hydraulischen Fahrzeugbremsanlage. Von den beiden Hydropumpen, die in Boxeranordnung im Hydraulikblock 2 angeordnet sind, sind in der Zeichnung zur Vereinfachung nur Enden von Pumpenkolben 4 sowie gestufte Pumpenbohrungen 5, die im Hydraulikblock 2 gleichachsig angebracht sind, dargestellt. Die Pumpenbohrungen 5 münden radial in einen Exzenterraum 6, der ebenfalls als gestufte Bohrung im Hydraulikblock 2 ausgeführt ist und der auf der Flachseite des Hydraulikblocks 2 mündet, an der der Elektromotor 3 angebracht ist. Derartige Hydraulikblöcke 2 bzw. Hydraulikaggregate 1 sind an sich bekannt und sollen deswegen an dieser Stelle nicht weiter erläutert werden.

Der Elektromotor 3 weist ein topfförmiges Motorgehäuse 7 auf, dessen offene Stirnseite mit einem lochscheibenförmigen Gehäusedeckel 8 verschlossen ist. Der Gehäusedeckel 8 bildet ein Lagerschild für ein Motorlager 9. Eine Motorwelle 10 ist mit dem genannten Motorlager 9 in dem das Lagerschild bildenden Gehäusedeckel 8 und mit einem weiteren Motorlager 11 an einer Stirnwand des Motorgehäuses 7 drehbar gelagert. Auf der Motorwelle 10 sind ein Rotor 12 und ein Kommutator 13 angebracht. Im Motorgehäuse 7 ist ein Stator 14 angebracht.

Das in den Gehäusedeckel 8 eingesetzte Motorlager 9 steht axial aus dem Gehäusedeckel 8 vor und greift in den Exzenterraum 6 des Hydraulikblocks 2 ein. Auf diese Weise ist der Elektromotor 3 im Exzenterraum 6 des Hydraulikblocks 2 zentriert.

Der Gehäusedeckel 8 des Elektromotors 3 weist einen Axialbund 15 auf, der das Motorlager 9 konzentrisch umschließt. Der Axialbund 15 des Elektromotors 3 greift in eine Ringstufe im Hydraulikblock 2 ein, mit der sich der Exzenterraum 6 an seiner dem Elektromotor 3 zugewandten Mündung erweitert. Zum Abdichten weist der Axialbund 15 einen radial nach außen stehenden, umlaufenden Wulst 16 auf, der dichtend an einer Umfangswand der Ringstufe an der Mündung des Exzenterraums 6 anliegt, in die der Axialbund 15 eingreift. In einer Stirnfläche des Axialbundes 15 ist eine schlitzförmige, umlaufende Nut 17 angebracht, durch die der radial äußere, den umlaufenden Wulst 16 aufweisende Bereich des Axialbundes 15 radial federnd ist. Der Wulst 16 liegt federnd unter Vorspannung an der Umfangswand der Ringstufe an.

Die Motorwelle 10 ragt bis nahe an eine Grundfläche in den Exzenterraum 6. Auf ihr Ende ist ein Exzenter 18 aufgepresst, der nach Art eines Radialkugellagers mit einem Innenring 19 und einem Außenring 20 ausgebildet ist, zwischen denen Lagerkugeln 21 wälzen. Zur Erzielung einer Exzentrizität weist ein Loch des Innenrings 19, mit dem der Innenring 19 auf die Motorwelle 10 aufgepresst ist, eine Exzentrizität zum Außenumfang des Innenrings 19 auf. In der Zeichnung ist die Exzentrizität des Innenrings 19 des Exzenters 18 durch die ungleiche Dicke auf der linken und der rechten Seite der Motorwelle 10 erkennbar. Bei Drehung der Motorwelle 10 und des Innenrings 19 bewegt sich der Außenring 20 des Exzenters 18 auf einer gedachten Kreisbahn um eine gedachte Drehachse der Motorwelle 10, ohne sich zu drehen. Dadurch werden die Pumpenkolben 4 der im Übrigen nicht dargestellten Hydropumpen zu einer in den Pumpenbohrungen 5 hin und her gehenden Hubbewegung angetrieben.

An der mit dem Gehäusedeckel 8 geschlossenen Stirnseite ist ein Rand des Motorgehäuses 7 zu einem nach außen stehenden Radialflansch 22 umgeformt. Der Radialflansch 22 liegt passgenau in einer kreisförmigen Nut 23 des Hydraulikblocks 2 ein. Die Nut 23 ist in der Flachseite des Hydraulikblocks 2 angebracht, an der der Elektromotor 3 befestigt ist. Die Nut 23 weist im Ausführungsbeispiel einen rechteckigen Querschnitt auf und umschließt den Exzenterraum 6 konzentrisch. An einem Außenrand der Nut 23 ist unterbrechungsfrei und umlaufend ein Wulst 24 ausgebildet, der den Radialflansch 22 des Elektromotors 3 übergreifend radial nach innen umgeformt, beispielsweise verstemmt ist. Vor dem Verstemmen hat der Wulst 24 die mit Strichlinien dargestellte Form. Das Verstemmen des Wulstes 24 kann beispielsweise mittels eines nicht dargestellten umlaufenden Werkzeugs erfolgen. Die Verstemmung mit dem Wulst 24 ist ein umformender Fügevorgang, durch den der Elektromotor 3 mit dem Hydraulikblock 2 verbunden ist. Durch den Fügevorgang ist der Elektromotor 3 am Hydraulikblocks 2 ohne zusätzliches Dichtmaterial abgedichtet. Die Abdichtung erfolgt durch Anlage des Radialflansches 22 des Motorgehäuse 7 an einem Grund der Nut 23 des Hydraulikblocks 2, am Außen- und/oder am Innenumfang des Radialflansches 22, der dichtend außen und/oder innen an Umfangsflächen der Nut 23 anliegt und zusätzlich durch den auf dem Radialflansch 22 des Motorgehäuses 7 aufliegenden, radial nach innen umgeformten Wulst 24 des Hydraulikblocks 2, der den Radialflansch 22 des Motorgehäuses 7 gegen den Grund der Nut 23 des Hydraulikblocks 2 drückt. Die Nut 23 bildet eine Ansenkung im Hydraulikblock 2, in der der Radialflansch 22 des Motorgehäuses 7 passgenau einliegt.

Außen unmittelbar an den Wulst 24 anschließend weist der Hydraulikblock 2 eine weitere Nut 25 auf. Diese Nut 25 ist umlaufend ausgeführt und umschließt den Wulst 24. Sie verhindert eine Spanbildung oder einen sonstige Materialabtrennung vom Hydraulikblock 2 beim Verstemmen des Wulstes 24. Dadurch wird vermieden, dass beim Verbinden des Elektromotors 3 mit dem Hydraulikblock 2 Materialteile zwischen den Elektromotor 3 und den Hydraulikblock 2 oder an sonstiger Stelle in das Hydraulikaggregat 1 gelangen.

## Patentansprüche

1. Hydraulikaggregat für eine eine Schlupfregelung aufweisende hydraulische Fahrzeugbremsanlage, mit einem Hydraulikblock (2), an dem ein Elektromotor (3) zum Antrieb einer Hydropumpe angebracht ist, wobei der Elektromotor (3) mit einer Stirnseite an einer Flachseite des Hydraulikblocks (2) angeordnet ist und einen Axialbund (15) aufweist, der abdichtend in eine Ansenkung des Hydraulikblocks (2) eingreift, wobei ein Motorlager (9) in einen Exzenterraum (6) des Hydraulikblocks (2) eingreift und den Elektromotor (3) im Exzenterraum (6) des Hydraulikblocks (2) zentriert, **dadurch gekennzeichnet, dass** der Elektromotor (3) durch einen umlaufenden, umformenden Fügevorgang mit dem Hydraulikblock (2) verbunden ist, dass sich der in die Ansenkung des Hydraulikblocks (2) eingreifende Axialbund (15) des Elektromotors (3) innerhalb der umlaufenden Verbindung (22, 24) mit dem Hydraulikblock (2) befindet, dass der Axialbund (15) radial federnd ist und mit radialer Vorspannung an einer Umfangsfläche der Ansenkung des Hydraulikblocks (2) anliegt, und dass der Axialbund (15) eine Axialnut (17) aufweist, die das radiale Federn des Axialbundes (15) bewirkt.

2. Hydraulikaggregat nach Anspruch 1, **dadurch gekennzeichnet, dass** der Elektromotor (3) durch den Fügevorgang abgedichtet mit dem Hydraulikblock (2) verbunden ist.

3. Hydraulikaggregat nach Anspruch 1, **dadurch gekennzeichnet, dass** der Hydraulikblock (2) eine passgenaue Ansenkung (23) für den Elektromotor (3) aufweist.

4. Hydraulikaggregat nach Anspruch 1, **dadurch gekennzeichnet, dass** der Elektromotor (3) einen umlaufenden Radialflansch (22) an seiner Stirnseite aufweist und dass der Hydraulikblock (2) eine umlaufende, wulstartige Erhöhung (24) aufweist, die den Radialflansch (22) des Elektromotors (3) übergreifend radial nach innen umgeformt ist.

5. Hydraulikaggregat nach Anspruch 4, **dadurch gekennzeichnet, dass** der Hydraulikblock (2) eine die umlaufende, wulstartige Erhöhung (24) umschließende, umlaufende Nut (25) aufweist.

## Claims

1. Hydraulic unit for a hydraulic vehicle brake system which has traction control, having a hydraulic block (2) to which is attached an electric motor (3) for driving a hydraulic pump, the electric motor (3) being arranged with an end side on a flat side of the hydraulic block (2) and having an axial collar (15) which engages sealingly into a counterbore of the hydraulic block (2), a motor bearing (9) engaging into an eccentric chamber (6) of the hydraulic block (2) and centring the electric motor (3) in the eccentric chamber (6) of the hydraulic block (2), **characterized in that** the electric motor (3) is connected to the hydraulic block (2) by means of an encircling deforming joining process, **in that** the axial collar (15), which engages into the counterbore of the hydraulic block (2), of the electric motor (3) is situated within the encircling connection (22, 24) to the hydraulic block (2), **in that** the axial collar (15) is radially resilient and bears with radial preload against a circumferential surface of the counterbore of the hydraulic block (2), and **in that** the axial collar (15) has an axial groove (17) which generates the radial resilience of the axial collar (15).

2. Hydraulic unit according to Claim 1, **characterized in that** the electric motor (3) is connected to the hydraulic block (2) in a sealed manner by means of the joining process.

3. Hydraulic unit according to Claim 1, **characterized in that** the hydraulic block (2) has a counterbore (23), which provides an accurate fit, for the electric motor (3).

4. Hydraulic unit according to Claim 1, **characterized in that** the electric motor (3) has an encircling radial flange (22) on its end side, and **in that** the hydraulic block (2) has an encircling, bead-like elevation (24) which is deformed radially inward so as to engage over the radial flange (22) of the electric motor (3).

5. Hydraulic unit according to Claim 4, **characterized in that** the hydraulic block (2) has an encircling groove (25) which surrounds the encircling, bead-like elevation (24).

## Revendications

1. Groupe hydraulique pour une installation de freinage hydraulique de véhicule présentant une régulation du patinage, avec un bloc hydraulique (2), sur lequel est monté un moteur électrique (3) pour l'entraînement d'une pompe hydraulique, le moteur électrique (3) étant disposé avec un côté frontal contre un côté plat du bloc hydraulique (2) et présentant un épaulement axial (15), qui vient en prise de manière hermétique dans un renfoncement du bloc hydraulique (2), un palier de moteur (9) venant en prise dans un espace excentré (6) du bloc hydraulique (2) et centrant le moteur électrique (3) dans l'espace excentré (6) du bloc hydraulique (2), **caractérisé en ce que** le moteur électrique (3) est connecté au bloc hydraulique (2) par une opération d'assemblage par déformation périphérique, **en ce que** l'épaulement axial (15) du moteur électrique (3) venant en prise dans le renfoncement du bloc hydraulique (2) se trouve à l'intérieur de la connexion périphérique (22, 24) au bloc hydraulique (2), **en ce que** l'épaulement axial (15) est radialement élastique et s'applique avec une précontrainte radiale contre une face périphérique du renfoncement du bloc hydraulique (2), et **en ce que** l'épaulement axial (15) présente une rainure axiale (17) qui produit la propriété élastique de l'épaulement axial (15).

2. Groupe hydraulique selon la revendication 1, **caractérisé en ce que** le moteur électrique (3) est connecté au bloc hydraulique (2) de manière étanche par l'opération d'assemblage.

3. Groupe hydraulique selon la revendication 1, **caractérisé en ce que** le bloc hydraulique (2) présente un renfoncement (23) ajusté pour le moteur électrique (3).

4. Groupe hydraulique selon la revendication 1, **caractérisé en ce que** le moteur électrique (3) présente une bride radiale périphérique (22) sur son côté frontal et **en ce que** le bloc hydraulique (2) présente un rehaussement périphérique (24) en forme de bourrelet, qui est déformé radialement vers l'intérieur en venant en prise par le dessus avec la bride radiale (22) du moteur électrique (3).

5. Groupe hydraulique selon la revendication 4, **caractérisé en ce que** le bloc hydraulique (2) présente une rainure périphérique (25) entourant le rehaussement périphérique (24) en forme de bourrelet.
